# EUROPÄISCHE PATENTSCHRIFT

(11) **EP 3 014 018 B1**
(45) Veröffentlichungstag und Bekanntmachung des Hinweises auf die Patenterteilung: **28.12.2016**
(21) Anmeldenummer: 15716851.9
(22) Anmeldetag: 22.04.2015
(51) Int. Cl.: D21C 9/00, D21H 17/06, D21H 17/07, D21H 17/40, D21H 17/45, D21H 17/63, D21H 17/00

(54) **MODIFIZIERTER ZELLSTOFF**
MODIFIED CELLULOSE
MATIÈRE CELLULAIRE MODIFIÉE

(30) Priorität: 28.04.2014 EP 14166146
(43) Veröffentlichungstag der Anmeldung: 04.05.2016
(73) Patentinhaber: Mondi AG, 1030 Wien (AT)
(72) Erfinder: RÜF, Walter, A-9400 Wolfsberg (AT)
(74) Vertreter: Nemec, Harald
(86) Internationale Anmeldenummer: PCT/EP2015/058669
(87) Internationale Veröffentlichungsnummer: WO 2015/165783

(56) Entgegenhaltungen:
- EP-A1- 0 116 512
- EP-A1- 1 013 825
- WO-A1-00/62730
- WO-A1-2011/120875

## Beschreibung

Die vorliegende Erfindung betrifft einen modifizierten Zellstoff, ein Verfahren zu seiner Herstellung sowie seine Verwendung.

Insbesondere betrifft die vorliegende Erfindung einen modifizierten Zellstoff, der zusammen mit Kunststoffen zu einem Verbundwerkstoff compoundiert werden kann.

Die Herstellung von Verbundwerkstoffen aus cellulosischen Materialien wie z.B. Zellstoff und einem oder mehreren Kunststoffen ist bekannt.

Es ist ebenfalls bekannt, Zellstoff chemisch zu modifizieren, um die Faser-Faser-Bindung des Zellstoffes zu verringern. Dieser Beeinflussung wird auch als "De-Bonding" bezeichnet. Damit wird die Anbindbarkeit des Zellstoffes an weitere Komponenten, insbesondere Kunststoffe zur Herstellung eines Verbundwerkstoffes, verbessert.

Die Literatur macht zahlreiche Vorschläge zu Substanzen und Verbindungen, die für eine solche Modifizierung geeignet sind. Beispielsweise sind die folgenden Publikationen zu nennen:
US 4,432,833; US 6,296,737; EP 2 464 681 A1; US 5,068,009; US 5,776,308;
WO 2012/012633; EP 0 458 657 A; EP 0 132 128 A1; US 7,186,316; US 3,556,931;
US 6,748,671; WO 2006/048332; US 2006/091578; WO 2006/049972; US 2006/084729;
DE 10 2004 034039; US 2005/225009; US 6,942,829; US 6,743,507; EP 1 567 586 A;
WO 2000/063486; EP 0 116 512 A; DE 3 119 907 A; US 3,755,220; WO 2007/056839;
US 6,632,863; EP 0 747 419; EP 0 633 963 A; WO 2011/018383, EP 1 013 825 A1,
WO 2011/120875, WO 00/62730.

In vielen dieser Dokumente (wie z.B. in der EP 1 013 825 A1) erfolgt die Modifizierung des Zellstoffes mit Hinblick auf die Herstellung von Papier. Die vorliegende Erfindung beschäftigt sich demgegenüber mit der Modifizierung von Zellstoff für die Compoundierung mit einem Kunststoff. Üblicherweise liegt der Zellstoff als Ausgangsprodukt dieser Compoundierung in Gegensatz zu Papier in loser Form, also in Form eines losen Gefüges von Zellstofffasern vor.

Als mögliche De-Bonder werden in der Literatur zahlreiche verschiedene Substanz- und Verbindungsgruppen vorgeschlagen. Häufig werden quaternäre Ammoniumverbindungen genannt.

Teilweise werden in den oben genannten Vorschlägen den Zellstoff modifizierende Substanzen erst während des Vermischens mit einem Kunststoff zur Herstellung eines Verbundwerkstoffes zugegeben.

Die vorliegende Erfindung betrifft demgegenüber eine Modifizierung des Zellstoffes zur Herstellung eines Vorproduktes, welches dann mit einem oder mehreren Kunststoffen zu einem Verbundwerkstoff compoundiert werden kann.

Trotz der zahlreichen Vorschläge in der Literatur besteht nach wie vor ein Bedarf an geeigneten modifizierten Zellstoffen, die sich gut zur Weiterverarbeitung zur Herstellung von Verbundwerkstoffen eignen.

Die Eignung zur Weiterverarbeitung wird im Folgenden anhand der Kennzahl des "Zugfestigkeitsindex" (ZFI) definiert. Der Zugfestigkeitsindex ZFI bezeichnet den Bruchwiderstand eines Zellstoffes breiten- und längenbezogen in der Einheit Nm/g. Je geringer der Zugfestigkeitsindex eines modifizierten Zellstoffes ist, umso mehr sind die Faser-Faser-Bindungen im Zellstoff geschwächt und umso besser eignet sich der modifizierte Zellstoff zur Weiterverarbeitung in einen Verbundwerkstoff.

Die Aufgabe der vorliegenden Erfindung wird durch einen modifizierten Zellstoff gelöst, enthaltend
zumindest eine Substanz a) ausgewählt aus der Gruppe bestehend aus Tonen,
zumindest eine Substanz b) ausgewählt aus der Gruppe bestehend aus monomeren, oligomeren oder polymeren quaternären Ammoniumverbindungen und zumindest eine Substanz c) ausgewählt aus der Gruppe bestehend aus alkoxylierten Fettalkoholen.

Es hat sich herausgestellt, dass ein Zellstoff, der mit einer Kombination der Substanzen a), b) und c) modifiziert ist, einen niedrigen Zugfestigkeitsindex aufweist und sich hervorragend zur Weiterverarbeitung zu Verbundwerkstoffen eignet.

Dabei hat sich überraschenderweise gezeigt, dass Substanzen der Gruppe a), die für sich allein keinen oder nur einen geringen Einfluss auf den Zugfestigkeitsindex aufweisen, offenbar die Wirkung einer Kombination von Substanzen der Gruppen b) und c) in synergistischer Weise steigern.

Die Substanz a) ist ausgewählt aus der Gruppe der Tone. Bevorzugt ist die Substanz a) ein Bentonit.

Der Ton kann gegebenenfalls modifiziert vorliegen. Möglich ist auch der Einsatz von mit quaternären Ammoniumverbindungen modifizierten Tonen. In diesem Fall ist trotzdem separat der Einsatz einer Substanz der Gruppe b) erforderlich.

Die Substanz b) ist ausgewählt aus der Gruppe bestehend aus monomeren, oligomeren oder polymeren quaternären Ammoniumverbindungen.

In einer bevorzugten Ausführungsform der vorliegenden Erfindung ist die Substanz b) ausgewählt aus der Gruppe bestehend aus Di-Fettsäurerest-dimethylammoniumverbindungen, Fettsäurerest-trimethylammoniumverbindungen, mit einem oder mehreren Fettsäureresten substituierte Esterquats und Imidazoliumverbindungen, und Mischungen davon.

Die Länge des oder der Fettsäurereste(s) in den Di-Fettsäurerest-dimethylammoniumverbindungen, Fettsäurerest-trimethylammoniumverbindungen, Esterquats und Imidazoliumverbindungen der Substanz b) kann 8 bis 20 Kohlenstoffatome, bevorzugt 12 bis 18 Kohlenstoffatome, besonders bevorzugt 16 bis 18 Kohlenstoffatome betragen.

Besonders bevorzugt ist/sind der oder die Fettsäurerest(e) ausgewählt aus der Gruppe bestehend aus Stearinsäure, Kokosfettsäuren, Talgfettsäuren und Mischungen davon.

In einer besonders bevorzugten Ausführungsform der vorliegenden Erfindung ist die Substanz b) Ditalgdimethylammoniumchlorid. Ditalgdimethylammoniumchlorid ist beispielsweise ein Bestandteil der kommerziell erhältlichen Produkte Arquad® 2T-70 (Hersteller: Akzo Nobel) oder Praepagen 3445 (Hersteller: Clariant).

Als Imidazoliumverbindungen kommen mit einem oder mehrere Fettsäureresten substitutierte Imidazoliumverbindungen bzw. Imidazoliumderivate in Betracht. Der Heterocyclus kann vollständig ungesättigt oder teilweise gesättigt vorliegen. Bevorzugt werden Substanzen der Strukturformel (I) 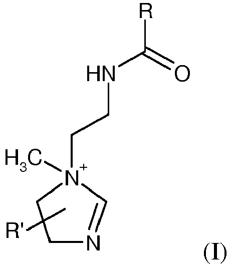 eingesetzt, wobei R' für einen oder mehrere Substituenten am Imidazolring steht und die Reste R und R' gleich oder verschieden voneinander gesättigte oder ungesättigte Fettsäurereste mit 16 bis 18 Kohlenstoffatomen sind. Bevorzugt ist R' ein Substituent an der 2-Position des Imidazolringes. Ein kommerziell erhältliches Produkt ist beispielsweise Arosurf PA844 (Hersteller: Evonik).

In einer weiteren bevorzugten Ausführungsform der vorliegenden Erfindung ist die Substanz b) ausgewählt aus der Gruppe bestehend aus Polymeren oder Copolymeren aus N,N-Dialkylaminoalkylacrylat-Monomeren.

In dieser Ausführungsform der vorliegenden Erfindung wird durch die Polymerisation des N,N-Dialkylaminoalkylacrylat mit sich selbst bzw. durch Co-Polymerisation mit einem dem Fachmann geläufigen geeigneten Co-Monomer eine polymere Verbindung mit quaternären Ammoniumgruppen gebildet.

Ethylencopolymere, die durch Copolymerisation mit (ggf. unter anderem) N,N-Dialkylaminoalkylacrylaten erhalten werden, sind in der WO 2011/018383 A1 beschrieben.

Die beiden N,N-Alkylreste des N,N-Dialkylaminoalkylacrylates sind bevorzugt gleich oder verschieden voneinander Methyl und Ethyl.

Ein besonders bevorzugtes Monomer ist N,N-Dimethylaminoalkylacrylat (DMAEA).

Für alle quaternären Ammoniumverbindungen der Substanzgruppe b) ist das Gegenion bevorzugt ausgewählt aus der Gruppe bestehend aus Halogenen, insbesondere Chlorid, CH₃SO₄⁻, SO₄²⁻, CH₃COO⁻ sowie Mischungen davon.

Als Substanz c) werden erfindungsgemäß Substanzen ausgewählt aus der Gruppe bestehend aus alkoxylierten Fettalkoholen eingesetzt.

In der Substanz c) kann die Länge des Fettsäurerestes 8 bis 20 Kohlenstoffatome, bevorzugt 10 bis 18 Kohlenstoffatome, besonders bevorzugt 12 bis 16 Kohlenstoffatome betragen.

Die Alkoxygruppe in der Substanz c) ist bevorzugt aus der Gruppe bestehend aus Ethoxy und/oder Propoxy ausgewählt. Bevorzugt liegt die Alkoxygruppe in oligomerer Form mit 2 bis 60 Alkoxyeinheiten, besonders bevorzugt 5 bis 10 Alkoxyeinheiten vor.

Geeignete Produkte der Substanzgruppe c) sind beispielsweise die kommerziell erhältlichen Produkt Plurafac® LF403 (Hersteller: BASF) sowie Sursol VL (Hersteller: BASF).

Der erfindungsgemäße modifizierte Zellstoff ist bevorzugt durch die folgenden Anteile an den Substanzen a), b) und c) gekennzeichnet:
Substanz a): < 10 Gew.%, bevorzugt < 5 Gew.%, besonders bevorzugt 3 Gew.% oder weniger, insbesondere bevorzugt zumindest 0,3 Gew.%,
Substanz b): < 10 Gew.%, bevorzugt < 5 Gew.%, besonders bevorzugt 3 Gew.% oder weniger, insbesondere bevorzugt zumindest 0,5 Gew.%,
Substanz c): < 10 Gew.%, bevorzugt < 5 Gew.%, besonders bevorzugt 3 Gew.% oder weniger, insbesondere bevorzugt zumindest 0,5 Gew.%.

In einer besonders bevorzugten Ausführungsform liegen alle drei Substanzen a) bis c) in einem Anteil von jeweils 3 Gew.% oder weniger vor.

Es hat sich gezeigt, dass durch die erfindungsgemäße Modifizierung mit der Kombination aus den Substanzen a), b) und c) ein modifizierter Zellstoff erhalten werden kann, der durch einen Zugfestigkeitsindex (ZFI) von 8 Nm/g oder weniger gekennzeichnet ist. Die Methode zur Bestimmung des Zugfestigkeitsindex wird weiter unten im Beispielsteil erläutert.

Der erfindungsgemäße Zellstoff liegt bevorzugt in loser Form, also in Form eines losen Gefüges von Zellstofffasern, vor. Die Schüttdichte des erfindungsgemäßen Zellstoffes kann typischerweise 110 bis 140 kg/m³ bei einer Feuchte des Zellstoffes von 5 bis 8 Gew.% bezogen auf das Gewicht des Zellstoffes (inklusive Feuchtigkeit) betragen.

Die Schüttdichte kann in Anlehnung an DIN 53468/ISO 697 gemessen werden, wobei der Auffangbehälter im Unterschied zu dieser Norm größere Dimensionen aufweist. Konkret wird ein trockener, sauberer 10 Liter Eimer wird auf eine Waage gestellt und tariert. Der lose Zellstoff wird mittels Schaufel in den Eimer gefüllt. Eine Verdichtung erfolgt nur durch die Schwerkraft, es wird nicht gepresst. Der Überschuss wird mittels Metalllineal abgezogen, und die Masse des Zellstoffs wird bestimmt.

Der erfindungsgemäße Zellstoff kann auch in einer verpressten Form, wie z.B. in Form von Zellstoff-Ballen oder in Form von Zellstoffblättern, vorliegen. In diesem Fall wird der gepresste Zellstoff vor einer Compoundierung mit einem Kunststoff z.B. mechanisch wieder zu einer losen Form vereinzelt.

In jedem Fall aber weist der erfindungsgemäße Zellstoff nicht die für Papier typischen ausgeprägten Bindungen zwischen den einzelnen Zellstofffasern auf.

Das Verfahren zur Herstellung des erfindungsgemäßen modifizierten Zellstoffes ist durch das homogene Vermischen eines Zellstoffes mit den Substanzen a), b) und c) in wässriger Suspension gekennzeichnet.

Bevorzugt findet das Vermischen in einem Pulper statt.

Der erfindungsgemäße Zellstoff ist daher bevorzugt dadurch gekennzeichnet, dass er durch das Zellstoffes mit den Substanzen a), b) und c) in wässriger Suspension in einem Pulper erhältlich ist. Das dabei gegebenenfalls nach Trocknung erhaltene Produkt ist ein loser Zellstoff, der in dieser Form mit einem Kunststoff compoundiert werden kann.

Die Dauer des Vermischens des Zellstoffes mit den Substanzen a), b) und c) kann 30 Minuten oder weniger, bevorzugt 20 Minuten oder weniger, besonders bevorzugt 10 Minuten oder weniger betragen.

Die Temperatur während des Prozesses kann 10°C - 90°C, bevorzugt 20°C - 70°C, besonders bevorzugt 50°C bis 60°C betragen.

Zur Herstellung des erfindungsgemäßen Zellstoffes sind grundsätzlich alle gängigen Zellstofftypen geeignet.

Insbesondere können sowohl Langfaser- als auch Kurzfaserzellstoffe (also Nadelholz- oder Laubholzzellstoffe) eingesetzt werden.

Als zugrundeliegende Holzart eignen sich insbesondere Kiefer, Fichte, Birke und Eucalyptus.

Der Zellstoff kann sowohl in Form eines Ballens als auch als Blattzellstoff eingesetzt werden.

Die vorliegende Erfindung betrifft auch die Verwendung des erfindungsgemäßen Zellstoffes zur Compoundierung mit einem Kunststoff, insbesondere zur Herstellung eines Verbundwerkstoffes.

Der zum Compoundieren einzusetzende Kunststoff ist bevorzugt aus der Gruppe der thermoplastischen Polymere, insbesondere Polyethylen, Polyproplyen, Co-Polymeren und Mischungen davon ausgewählt.

Co-Polymere können insbesondere aus Polyethylen und Polypropylen aufgebaut sein. Als weitere geeignete Kunststoffe sind Polyvinylchlorid, Polymilchsäure, Acrylnitril-Butadien-Styrol-Polymere, Polyoxymethylen, Polyamide, Polybutylenterephtalat, Polycarbonate, Polymethylmethacrylate und Polyethylenterephthalat zu nennen.

In weiterer Folge betrifft die vorliegende Erfindung einen Zellstoff/Kunststoff-Verbundwerkstoff, der durch das Compoundieren des erfindungsgemäßen modifizierten Zellstoffes mit einem Kunststoff erhältlich ist.

Dem Fachmann ist die Herstellung von Zellstoff/Kunststoff-Verbundwerkstoffen an sich bekannt, weswegen eine nähere Beschreibung möglicher Verfahrenstechniken dazu hier unterbleiben kann.

Im Folgenden wird die vorliegende Erfindung anhand von Beispielen bevorzugter Ausführungsformen näher erläutert.

### Beispiele:

### Bestimmung des Zugfestigkeitsindex (ZFI)

Der ZFI der im folgenden beschriebenen modifizierten und unmodifizierten Zellstoffe wurde nach ISO 1924/3 bestimmt. Die zur Bestimmung notwendigen Zellstoffblätter wurden in Anlehnung an ISO 5264-2 und ISO 5269-2 hergestellt, wobei die Aufschlagezeit, von der Norm abweichend, mit 3.000 Umdrehungen statt 30.000 Umdrehungen (das entspricht 1 Minute statt 10 Minuten) gewählt wurde.

### Beispielsgruppe 1

### Ausgangszellstoff (Vergleichsbeispiel)

Als Ausgangszellstoff wurde ein kommerziell erhältlicher Zellstoff der Type Södra Green Z85 (ein Sulfatzellstoff auf Nadelholzbasis) herangezogen. Der gemessene ZFI dieses Zellstoffes betrug 25,3 Nm/g. Im technischen Datenblatt ist der ZFI mit 26 angeführt.

### Zellstoffmodifizierung

Soweit nicht anders angegeben, wurde zu den im Folgenden angeführten Beispielen der Zellstoff jeweils wie folgt mit den jeweiligen Modifizierungssubstanzen behandelt:
66 g Zellstoff werden in 2 Liter Wasser bei Raumtemperatur quellen gelassen und anschließend mit 30000 Umdrehungen (10 min) gemeinsam mit den Additiv-Chemikalien aufgeschlagen.

Die Normblätter wurden direkt aus dem nassen Zellstoff wie oben beschrieben hergestellt.

In den folgenden Tabellen ist neben dem jeweils am modifizierten Zellstoff gemessenen Zugfestigkeitsindex (ZFI) das prozentuelle Ausmaß des Debonding, bezogen auf den ZFI des unbehandelten Ausgangszellstoffes (25,3 Nm/g), angegeben.

### Nicht erfindungsgemäß modifizierte Zellstoffe (Vergleichsbeispiele)

**Tabelle 1**

| **Bsp. Nr.** | **%** | **Substanz a** | **%** | **Substanz b** | **%** | **Substanz c** | **ZFI** | **% Debonding** |
|---|---|---|---|---|---|---|---|---|
| C1 | 3 | Opazil AOG | | | | | 24,5 | 3,20 |
| C2 | 1 | Pitchbent K | | | | | 23,8 | 5,93 |
| C3 | 2 | Pitchbent K | | | | | 23,6 | 6,72 |
| C4 | 3 | Pitchbent K | | | | | 23,2 | 8,30 |
| C5 | | | 1,2 | Arquad T 50 | | | 14,2 | 43,87 |
| C6 | | | 0,5 | Arquad 2T-70 | | | 11,4 | 54,94 |
| C7 | | | 1 | Arquad 2T-70 | | | 10,6 | 58,10 |
| C8 | | | 0,5 | Arquad 2C-75 | | | 12,5 | 50 |
| C9 | | | | | 2 | Plurafac LF403 | 17,5 | 30,83 |
| C10 | | | | | 2 | Sursol VL | 18,2 | 28,06 |
| C11 | | | 1 | Arquad 2T-70 | 1 | Sursol VL | 9,1 | 64,03 |
| C12 | | | 0,5 | Arquad T 50 | 1 | Sursol VL | 9,03 | 64,31 |
| C13 | | | 0,5 | Arquad 2T-70 | 1 | Plurafac LF 403 | 9,4 | 62,80 |
| C14 | | | 0,5 | Arquad 2T-70 | 1 | Sursol VL | 9 | 64 |

Die Produkte Opazil AOG und Pitchbent K basieren jeweils auf Bentonit.

Arquad T 50 basiert auf Talg-trimethylammoniumchlorid.

Arquad 2T-70 basiert auf Ditalg-dimethylammoniumchlorid.

Arquad 2C-75 basiert auf Dicoco-dimethylammoniumchlorid.

Aus der Tabelle 1 ist ersichtlich, dass die Modifizierung des Ausgangszellstoffes nur mit Substanzen der Gruppe a) (Tone) nur einen sehr geringen Einfluss auf den ZFI hat.

Die Modifizierung mit Substanzen der Gruppe b) und der Gruppe c) sowie von Kombinationen von Substanzen der Gruppe b) und der Gruppe c) bewirkt eine stärkere Herabsetzung des ZFI, doch wäre dieser für die meisten Anwendungen, insbesondere für die Weiterverarbeitung zu Zellstoff/Kunststoff-Verbundwerkstoffen nach wie vor zu hoch.

### Erfindungsgemäß modifizierte Zellstoffe

**Tabelle 2**

| **Bsp. Nr.** | **%** | **Substanz a** | **%** | **Substanz b** | **%** | **Substanz c** | **ZFI** | **% Debonding** |
|---|---|---|---|---|---|---|---|---|
| 1.1 | 1 | Opazil AOG | 1 | Arquad 2T-70 | 1 | Plurafac LF403 | 5,7 | 77,20 |
| 1.2 | 1 | Pitchbent K | 1 | Arquad 2T-70 | 1 | Plurafac LF403 | 6,15 | 75,69 |
| 1.3 | 2 | Pitchbent K | 1,5 | Arquad 2T-70 | 1,5 | Plurafac LF403 | 4,7 | 81,20 |
| 1.4 | 2 | Pitchbent K | 1,5 | Arquad 2T-70 | 1,5 | Sursol VL | 5,2 | 79,20 |
| 1.5 | 2 | Pitchbent K | 2 | Arquad 2T-70 | 2 | Plurafac LF403 | 4,4 | 82,40 |
| 1.6 | 2 | Pitchbent K | 2 | Arquad 2T-70 | 2 | Sursol VL | 4,6 | 81,60 |
| 1.7 | 1 | Pitchbent K | 1 | Tuxol Q AHC | 1 | Sursol VL | 6,4 | 74,40 |
| 1.8 | 2 | Pitchbent K | 0,5 | Arquad 2C-75 | 3 | Sursol VL | 10,7 | 57,20 |
| 1.9 | 2 | Pitchbent K | 1,5 | Varisoft TA 100 | 1,5 | Sursol VL | 5,8 | 76,80 |
| 1.10 | 1 | Garamite 1958 | 1 | Arquad 2T-70 | 1 | Plurafac LF403 | 7,5 | 72,22 |
| 1.11 | 2 | Nanofil 116 | 2 | Arquad 2T-70 | 2 | Plurafac LF403 | 6,6 | 75,56 |
| 1.12 | 2 | Garamite 1958 | 2 | Arquad 2T-70 | 2 | Plurafac LF403 | 6,96 | 74,22 |

Das Produkt "Garamite 1958" ist ein mit quaternärem Alkylammonium modifizierter Ton. Das Produkt "Nanofil 116" basiert auf Bentonit.

Tuxol Q AHC basiert auf Ditalg-dimethylammoniumchlorid.

Varisoft TA 100 basiert auf Distearyl-dimethylammoniumchlorid.

Aus Tabelle 2 ist ersichtlich, dass mit einer Kombination der Substanzen aus den Gruppen a), b) und c) deutlich niedrigere Zugfestigkeiten, also ein viel höheres Ausmaß an Debonding erreicht werden kann als mit den Substanzen alleine oder nur in einer Kombination aus zwei der Substanzen. Insbesondere scheint die Verwendung von Tonen der Gruppe a), die an sich alleine kaum einen Effekt ergeben, die Wirkung einer Kombination aus Substanzen der Gruppe b) und c) deutlich zu verbessern.

Wie aus der Tabelle 2 ebenfalls ersichtlich, lassen sich mit der erfindungsgemäßen Kombination der Substanzen a), b) und c) Zugfestigkeitsindices von 8 Nm/g oder weniger erreichen, was die erfindungsgemäß modifizierten Zellstoffe hervorragend zur Weiterverarbeitung zu Zellstoff/Kunststoff-Verbundwerkstoffen geeignet macht.

### Beispielsgruppe 2

### Ausgangszellstoff

Als Ausgangszellstoff wurde ein kommerziell erhältlicher Zellstoff der Type Suzano (ein Sulfatzellstoff auf Eukalyptus-Basis, gebleicht) herangezogen. Der gemessene ZFI dieses Zellstoffes betrug 22,4 Nm/g.

Die Zellstoffmodifizierung erfolgte jeweils wie für die Beispielsgruppe 1 beschrieben.

Die Ergebnisse sind in der folgenden Tabelle 3 zusammengefasst:

| **Bsp. Nr.** | **%** | **Substanz a** | **%** | **Substanz b** | **%** | **Substanz c** | **ZFI** | **% Debonding** |
|---|---|---|---|---|---|---|---|---|
| 2.1 | 2 | Papercol PF | 1,5 | Arquad 2T-70 | 2 | Plurafac LF403 | 7,53 | 66,41 |
| 2.2 | 2 | Pitchbent K | 1,5 | Arquad 2T-70 | 2 | Sursol VL | 5,06 | 77,43 |
| 2.3 | 2 | Pitchbent K | 1,5 | Arquad 2T-70 | 2 | Marlosol TA3030 | 5,34 | 76,18 |
| 2.4 | 2 | Pitchbent K | 1,5 | Arquad 2T-70 | 2 | Marlowet 4702 | 5,24 | 76,63 |
| 2.5 | 2 | Pitchbent K | 1,5 | Arquad 2T-70 | 2 | Emulan P | 6,46 | 71,19 |
| 2.6 | 2 | Pitchbent K | 1,5 | Arquad 2T-70 | 2 | Hoesch SH 55/95 PF | 6,47 | 71,14 |
| 2.7 | 2 | Pitchbent K | 1,5 | Arquad 2T-70 | 2 | Plurafac LF403 | 5,50 | 75,47 |
| 2.8 | 2 | Pitchbent K | 1,5 | Varisoft TA 9100 | 2 | Plurafac LF403 | 6,57 | 70,70 |
| 2.9 | 2 | Pitchbent K | 1,5 | Arosurf PA 842 V | 2 | Plurafac LF403 | 5,10 | 77,25 |
| 2.10 | 2 | Pitchbent K | 1,5 | Praepagen TQ | 2 | Plurafac LF403 | 5,87 | 73,82 |
| 2.11 | 2 | Pitchbent K | 2 | Praepagen TQ | 2 | Plurafac LF403 | 5,83 | 74,00 |
| 2.12 | 2 | Pitchbent K | 1,5 | Arquad HTB-75 | 2 | Plurafac LF403 | 6,64 | 70,38 |
| 2.13 | 2 | Pitchbent K | 1,5 | Armeen HAT | 2 | Plurafac LF403 | 7,53 | 66,41 |
| 2.14 | 2 | Pitchbent K | 1,5 | Armeen T | 2 | Plurafac LF403 | 5,46 | 75,65 |
| 2.15 | 2 | Pitchbent K | 1,5 | Varisoft TA 100 | 2 | Sursol VL | 5,48 | 75,56 |
| 2.16 | 2 | Pitchbent K | 2 | Arosurf PA 842 V | 2 | Marlosol TA3030 | 5,55 | 75,25 |
| 2.17 | 2 | Pitchbent K | 3 | Praepagen TQ | 2 | Emulan P | 5,95 | 73,46 |
| 2.18 | 2 | Pitchbent K | 3 | Praepagen TQ | 2 | Marlosol TA3030 | 5,24 | 76,63 |
| 2.19 | 2 | Pitchbent K | 0,75 | Arquad 2T-70 | 2 | Plurafac LF403 | 9,02 | 59,77 |
| 2.20 | 2 | Pitchbent K | 1 | Arquad 2T-70 | 2 | Plurafac LF403 | 8,76 | 60,93 |
| 2.21 | 2 | Pitchbent K | 1,5 | Arquad 2T-70 | 1 | Plurafac LF403 | 12,9 3 | 42,33 |
| 2.22 | 2 | Pitchbent K | 1,5 | Arquad 2T-70 | 1,5 | Plurafac LF403 | 9,08 | 59,50 |
| 2.23 | 0,75 | Pitchbent K | 1,5 | Arquad 2T-70 | 2 | Plurafac LF403 | 5,57 | 75,16 |
| 2.24 | 0,5 | Pitchbent K | 1,5 | Arquad 2T-70 | 2 | Plurafac LF403 | 5,82 | 74,04 |
| 2.25 | 0,4 | Pitchbent K | 1,5 | Arquad 2T-70 | 2 | Plurafac LF403 | 5,73 | 74,44 |
| 2.26 | 0,3 | Pitchbent K | 1,5 | Arquad 2T-70 | 2 | Plurafac LF403 | 5,54 | 75,29 |
| 2.27 | 2 | Opazil | 1,5 | Arquad 2T-70 | 2 | Plurafac LF403 | 5,80 | 74,13 |
| 2.28 | 2 | Papercol PF | 1,5 | Arquad 2T-70 | 2 | Plurafac LF403 | 7,53 | 66,41 |
| 2.29 | 2 | Laviofloc P2G | 1,5 | Arquad 2T-70 | 2 | Plurafac LF403 | 5,31 | 76,32 |

Marlosol TA3030 basiert auf einem ethoxylierten Isotridecanol.

Marlowet 4702 basiert auf einem Ölsäure-polyethylenglykol-diester.

Emulan P basiert auf ethoxylierten C12-C14-Alkoholen.

Hoesch SH 55/95 basiert auf einem Oleylcetyl-5,5-polyglykolether.

Arosurf PA 842 V basiert auf einem 2-C17-ungesättigt alkyl-1-(2-C18-ungesättigt amidoethyl)-4,5-dihydro-N-methyl-imidazoliumsalz.

Praepagen TQ basiert auf einem Triethanolamin-di-esterquat-methosulphat mit im wesentlichen C16/C18 gesättigten und ungesättigten Fettsäuren.

Arquad HTB-75 basiert auf C16-18-alkyl-dimethylammoniumchloriden. Armeen HAT und Armeen T basieren jeweils auf Talgaminen.

Papercol PF und Laviofloc P2G basieren jeweils auf Bentonit.

## Patentansprüche

1. Modifizierter Zellstoff, enthaltend
zumindest eine Substanz a) ausgewählt aus der Gruppe bestehend aus Tonen, zumindest eine Substanz b) ausgewählt aus der Gruppe bestehend aus monomeren, oligomeren oder polymeren quaternären Ammoniumverbindungen und
zumindest eine Substanz c) ausgewählt aus der Gruppe bestehend aus alkoxylierten Fettalkoholen.

2. Modifizierter Zellstoff gemäß Anspruch 1, **dadurch gekennzeichnet, dass** die Substanz a) ein Bentonit ist.

3. Modifizierter Zellstoff gemäß Anspruch 1 oder 2, **dadurch gekennzeichnet, dass** die Substanz b) ausgewählt aus der Gruppe bestehend aus Di-Fettsäurerest-dimethylammoniumverbindungen, Fettsäurerest-trimethylammoniumverbindungen, mit einem oder mehreren Fettsäurerest(en) substituierte Esterquats und Imidazoliumverbindungen, und Mischungen davon ist.

4. Modifizierter Zellstoff gemäß Anspruch 3, **dadurch gekennzeichnet, dass** die Länge des oder der Fettsäurereste(s) in den Di-Fettsäurerest-dimethylammoniumverbindungen, Fettsäurerest-trimethylammoniumverbindungen, mit einem oder mehreren Fettsäureresten substituierten Esterquats und Imidazoliumverbindungen der Substanz b) 8 bis 20 Kohlenstoffatome, bevorzugt 12 bis 18 Kohlenstoffatome, besonders bevorzugt 16 bis 18 Kohlenstoffatome beträgt.

5. Modifizierter Zellstoff gemäß Anspruch 3 oder 4, **dadurch gekennzeichnet, dass** der oder die Fettsäurerest(e) ausgewählt aus der Gruppe bestehend aus Stearinsäure, Kokosfettsäuren, Talgfettsäuren und Mischungen davon ist/sind.

6. Modifizierter Zellstoff gemäß Anspruch 5, **dadurch gekennzeichnet, dass** die Substanz b) Ditalgdimethylammoniumchlorid ist.

7. Modifizierter Zellstoff gemäß Anspruch 1 oder 2, **dadurch gekennzeichnet, dass** die Substanz b) ausgewählt aus der Gruppe bestehend aus Polymeren oder Copolymeren aus N,N-Dialkylaminoalkylacrylat-Monomeren ist.

8. Modifizierter Zellstoff gemäß einem der Ansprüche 3 bis 7, **dadurch gekennzeichnet, dass** das Gegenion der quaternären Ammoniumverbindung ausgewählt aus der Gruppe bestehend aus Halogenen, insbesondere Chlorid, CH₃SO₄⁻, SO₄²⁻, CH₃COO⁻ sowie Mischungen davon ist.

9. Modifizierter Zellstoff gemäß einem der vorherigen Ansprüche, **dadurch gekennzeichnet, dass** die Länge des Fettsäurerestes in der Substanz c) 8 bis 20 Kohlenstoffatome, bevorzugt 10 bis 18 Kohlenstoffatome, besonders bevorzugt 12 bis 16 Kohlenstoffatome beträgt.

10. Modifizierter Zellstoff gemäß einem der vorherigen Ansprüche, **dadurch gekennzeichnet, dass** die Alkoxygruppe in der Substanz c) aus der Gruppe bestehend aus Ethoxy und/oder Propoxy ausgewählt ist.

11. Modifizierter Zellstoff gemäß einem der vorherigen Ansprüche, **gekennzeichnet durch** die folgenden Anteile an den Substanzen a), b) und c):
Substanz a): < 10 Gew.%, bevorzugt < 5 Gew.%, besonders bevorzugt 3 Gew.% oder weniger, insbesondere bevorzugt zumindest 0,3 Gew.%
Substanz b): < 10 Gew.%, bevorzugt < 5 Gew.%, besonders bevorzugt 3 Gew.% oder weniger, insbesondere bevorzugt zumindest 0,5 Gew.%
Substanz c): < 10 Gew.%, bevorzugt < 5 Gew.%, besonders bevorzugt 3 Gew.% oder weniger, insbesondere bevorzugt zumindest 0,5 Gew.%.

12. Modifizierter Zellstoff gemäß einem der vorherigen Ansprüche, **gekennzeichnet durch** einen Zugfestigkeitsindex (ZFI) von 8 Nm/g oder weniger.

13. Modifizierter Zellstoff gemäß einem der vorherigen Ansprüche, **dadurch gekennzeichnet, dass** der Zellstoff in loser Form oder in verpresster Form, insbesondere in Form von Zellstoffballen oder Zellstoffblättern, vorliegt.

14. Modifizierter Zellstoff gemäß einem der vorherigen Ansprüche, **dadurch gekennzeichnet, dass** er durch das Vermischen eines Zellstoffes mit den Substanzen a), b) und c) in wässriger Suspension in einem Pulper erhältlich ist.

15. Verwendung eines Zellstoffes gemäß einem der Ansprüche 1 bis 14 zur Compoundierung mit einem Kunststoff.

16. Verwendung gemäß Anspruch 15, **dadurch gekennzeichnet, dass** der Kunststoff ausgewählt aus der Gruppe der thermoplastischen Polymere, insbesondere Polyethylen, Polyproplyen, Co-polymeren und Mischungen davon ist.

17. Zellstoff/Kunststoff-Verbundwerkstoff, erhältlich durch das Compoundieren eines modifizierten Zellstoffes gemäß einem der Ansprüche 1 bis 14 mit einem Kunststoff.

## Claims

1. A modified pulp containing
at least one substance a) selected from the group consisting of clays,
at least one substance b) selected from the group consisting of monomeric, oligomeric or polymeric quaternary ammonium compounds and
at least one substance c) selected from the group consisting of alkoxylated fatty alcohols.

2. A modified pulp according to claim 1, **characterized in that** the substance a) is a bentonite.

3. A modified pulp according to claim 1 or 2, **characterized in that** the substance b) is selected from the group consisting of di-fatty acid residue dimethyl ammonium compounds, fatty acid residue trimethyl ammonium compounds, esterquats substituted with one or several fatty acid residues and imidazolium compounds, and mixtures thereof.

4. A modified pulp according to claim 3, **characterized in that** the length of the fatty acid residue(s) in the di-fatty acid residue dimethyl ammonium compounds, fatty acid residue trimethyl ammonium compounds, esterquats substituted with one or several fatty acid residues and imidazolium compounds of substance b) ranges from 8 to 20 carbon atoms, preferably from 12 to 18 carbon atoms, particularly preferably from 16 to 18 carbon atoms.

5. A modified pulp according to claim 3 or 4, **characterized in that** the fatty acid residue(s) is/are selected from the group consisting of stearic acid, coconut fatty acids, tallow fatty acids and mixtures thereof.

6. A modified pulp according to claim 5, **characterized in that** the substance b) is ditallow dimethyl ammonium chloride.

7. A modified pulp according to claim 1 or 2, **characterized in that** the substance b) is selected from the group consisting of polymers or copolymers from N,N-dialkyl aminoalkyl acrylate monomers.

8. A modified pulp according to any of claims 3 to 7, **characterized in that** the counterion of the quaternary ammonium compound is selected from the group consisting of halogens, in particular chloride, CH₃SO₄⁻, SO₄²⁻, CH₃COO⁻ as well as mixtures thereof.

9. A modified pulp according to any of the preceding claims, **characterized in that** the length of the fatty acid residue in substance c) ranges from 8 to 20 carbon atoms, preferably from 10 to 18 carbon atoms, particularly preferably from 12 to 16 carbon atoms.

10. A modified pulp according to any of the preceding claims, **characterized in that** the alkoxy group in substance c) is selected from the group consisting of ethoxy and/or propoxy.

11. A modified pulp according to any of the preceding claims, **characterized by** the following proportions of the substances a), b) and c):
substance a): < 10% by weight, preferably < 5% by weight, particularly preferably 3% by weight or less, especially preferably at least 0.3% by weight,
substance b): < 10% by weight, preferably < 5% by weight, particularly preferably 3% by weight or less, especially preferably at least 0.5% by weight,
substance c): < 10% by weight, preferably < 5% by weight, particularly preferably 3% by weight or less, especially preferably at least 0.5% by weight.

12. A modified pulp according to any of the preceding claims, **characterized by** a tensile strength index (ZFI) of 8 Nm/g or less.

13. A modified pulp according to any of the preceding claims, **characterized in that** the pulp is provided in loose form or in a pressed form, in particular in the form of pulp bales or pulp sheets.

14. A modified pulp according to any of the preceding claims, **characterized in that** it is obtainable by mixing a pulp with the substances a), b) and c) in an aqueous suspension in a pulper.

15. The use of a pulp according to any of claims 1 to 14 for compounding with a plastic.

16. The use according to claim 15, **characterized in that** the plastic is selected from the group of thermoplastic polymers, in particular polyethylene, polyproplyene, copolymers and mixtures thereof.

17. A pulp/plastic composite material, obtainable by compounding a modified pulp according to any of claims 1 to 14 with a plastic.

## Revendications

1. Cellulose modifiée, contenant
au moins une substance a) choisie dans le groupe constitué des argiles,
au moins une substance b) choisie dans le groupe constitué des composés d'ammonium quaternaire monomères, oligomères ou polymères et
au moins une substance c) choisie dans le groupe constitué des alcools gras alcoxylés.

2. Cellulose modifiée selon la revendication 1, **caractérisée en ce que** la substance a) est une bentonite.

3. Cellulose modifiée selon la revendication 1 ou 2, **caractérisée en ce que** la substance b) est choisie dans le groupe constitué des composés de diméthylammonium d'un résidu de diacide gras, des composés de triméthylammonium d'un résidu d'acide gras, des esterquats substitués par un ou plusieurs résidus d'acide gras et des composés d'imidazolium et des mélanges de ceux-ci.

4. Cellulose modifiée selon la revendication 3, **caractérisée en ce que** la longueur du ou des résidus d'acides gras dans les composés de diméthylammonium d'un résidu de diacide gras, les composés de triméthylammonium d'un résidu d'acide gras, les esterquats substitués par un ou plusieurs résidus d'acide gras et les composés d'imidazolium de la substance b) est de 8 à 20 atomes de carbone, de préférence 12 à 18 atomes de carbone, particulièrement préférentiellement de 16 à 18 atomes de carbone.

5. Cellulose modifiée selon la revendication 3 ou 4, **caractérisée en ce que** le ou les résidus d'acides gras est/sont choisi(s) dans le groupe constitué de l'acide stéarique, des acides gras de coco, des acides gras de suif, et des mélanges de ceux-ci.

6. Cellulose modifiée selon la revendication 5, **caractérisée en ce que** la substance b) est le chlorure de disuif-diméthylammonium.

7. Cellulose modifiée selon la revendication 1 ou 2, **caractérisée en ce que** la substance b) est choisie dans le groupe constitué des polymères ou des copolymères de monomères de N,N-dialkylaminoalkylacrylate.

8. Cellulose modifiée selon l'une des revendications 3 à 7, **caractérisée en ce que** le contre-ion du composé d'ammonium quaternaire est choisi dans le groupe constitué des halogènes, en particulier du chlorure, de CH₃SO₄⁻, SO₄²⁻, CH₃COO⁻ et des mélanges de ceux-ci.

9. Cellulose modifiée selon l'une des revendications précédentes, **caractérisée en ce que** la longueur du résidu d'acide gras dans la substance c) est de 8 à 20 atomes de carbone, de préférence de 10 à 18 atomes de carbone, particulièrement préférentiellement de 12 à 16 atomes de carbone.

10. Cellulose modifiée selon l'une des revendications précédentes, **caractérisée en ce que** le groupe alcoxy dans la substance c) est choisi dans le groupe constitué de l'éthoxy et/ou du propoxy.

11. Cellulose modifiée selon l'une des revendications précédentes, **caractérisée par** les proportions suivantes des substances a), b) et c) :
substance a) : < 10 % en poids, de préférence < 5 % en poids, particulièrement préférentiellement 3 % en poids ou moins, particulièrement préférentiellement au moins 0,3 % en poids,
substance b) : < 10 % en poids, de préférence < 5 % en poids, particulièrement préférentiellement 3 % en poids ou moins, particulièrement préférentiellement au moins 0,5 % en poids,
substance c) : < 10 % en poids, de préférence < 5 % en poids, particulièrement préférentiellement 3 % en poids ou moins, particulièrement préférentiellement au moins 0,5 % en poids.

12. Cellulose modifiée selon l'une des revendications précédentes, **caractérisée par** un indice de résistance à la traction (IRT) de 8 Nm/g ou moins.

13. Cellulose modifiée selon l'une des revendications précédentes, **caractérisée en ce que** la cellulose se présente sous une forme en vrac ou sous une forme compressée, en particulier sous la forme de balles de cellulose ou de feuilles de cellulose.

14. Cellulose modifiée selon l'une des revendications précédentes, **caractérisée en ce qu'**elle peut être obtenue par mélange d'une cellulose avec les substances a), b) et c) en suspension aqueuse dans un pulpeur.

15. Utilisation d'une cellulose selon l'une des revendications 1 à 14 pour le compoundage avec un plastique.

16. Utilisation selon la revendication 15, **caractérisée en ce que** le plastique est choisi dans le groupe des polymères thermoplastiques, en particulier du polyéthylène, du polypropylène, des copolymères et des mélanges de ceux-ci.

17. Matériau composite cellulose/plastique, pouvant être obtenu par le compoundage d'une cellulose modifiée selon l'une des revendications 1 à 14 avec un plastique.
